(19) **Europäisches Patentamt / European Patent Office / Office européen des brevets**

(11) **EP 4 742 660 A1**

(12) **EUROPEAN PATENT APPLICATION**
published in accordance with Art. 153(4) EPC

(43) Date of publication:
**13.05.2026 Bulletin 2026/20**

(21) Application number: **24836026.5**

(22) Date of filing: **02.07.2024**

(51) International Patent Classification (IPC):
**H04N 19/11** (2014.01)    **H04N 19/182** (2014.01)
**H04N 19/186** (2014.01)    **H04N 19/593** (2014.01)

(52) Cooperative Patent Classification (CPC):
**H04N 19/11; H04N 19/182; H04N 19/186; H04N 19/593**

(86) International application number:
**PCT/JP2024/023865**

(87) International publication number:
**WO 2025/009513 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.07.2023 JP 2023109566**

(71) Applicant: **Nippon Hoso Kyokai**
**Tokyo 150-8001 (JP)**

(72) Inventors:
• **IWAMURA, Shunsuke**
  **Tokyo 157-8510 (JP)**
• **NEMOTO, Shimpei**
  **Tokyo 157-8510 (JP)**
• **KONDO, Yuichi**
  **Tokyo 157-8510 (JP)**
• **ARAI, Daichi**
  **Tokyo 157-8510 (JP)**

(74) Representative: **SSM Sandmair**
**Patentanwälte Rechtsanwalt**
**Partnerschaft mbB**
**Joseph-Wild-Straße 20**
**81829 München (DE)**

(54) **PREDICTION DEVICE, ENCODING DEVICE, DECODING DEVICE, AND PROGRAM**

(57)    A prediction device that performs prediction in units of blocks obtained by dividing an image comprises: a generator configured to select a prediction process to be applied from among a plurality of prediction processes by threshold determination for each area to be predicted in the block to generate a prediction area; a determiner configured to estimate or identify a specific area to which a prediction process different from a prediction process applied to surrounding prediction areas is applied, among the prediction areas generated in the block by the generator; and a corrector configured to perform a correction process using another area on the specific area estimated or identified by the determiner.

FIG. 7

EP 4 742 660 A1

## Description

TECHNICAL FIELD

The present disclosure relates to a prediction device, an encoding device, a decoding device, and a program.

BACKGROUND ART

In video coding schemes such as HEVC (High Efficiency Video Coding) and VVC (Versatile Video Coding), an encoding device generates a prediction block by predicting a coding block (CU: Coding Unit) obtained by dividing an original image into block units, and performs transformation, quantization, and entropy encoding on a prediction residual, which is a difference between the coding block of the original image and the prediction block, to transmit the prediction residual.

The Joint Video Experts Team (JVET) (ISO/IEC JTC1 SC29 WG5), an international standardization working group for video coding, is studying ECM (Enhanced Compression Model), which is a next-generation video coding technology. As a mode of intra prediction, which is prediction considering correlation within a frame, a prediction mode for a chroma signal called MMLM (Multi Model Linear Model) is introduced in ECM.

MMLM is an extension technology of CCLM (Cross Component Linear Model) adopted in VVC. CCLM is a mode for predicting a corresponding chroma block using a decoded block of luma, and predicts prediction pixels of a target chroma block from a decoded block of luma at a corresponding position using a linear model. Herein, a reduced block obtained by downsampling the decoded block of luma according to a chroma format is used.

The linear model is calculated by the least mean squares using decoded pixels adjacent to the target chroma block (chroma reference pixels) and decoded pixels adjacent to the decoded block of luma at the corresponding position (luma reference pixels). In VVC, luma and chroma reference pixels used for linear model calculation are limited to only some pixel positions to realize lightweight processing.

Since CCLM is premised on the fact that distribution of luma and chroma signals in a block has a certain tendency, there is a problem that approximation accuracy significantly decreases when distribution of luma and chroma signals includes a plurality of tendencies, such as when an object boundary exists in the block. Therefore, in MMLM, a plurality of distributions are assumed, and distribution of luma and chroma signals is clustered using, for example, an average value of luma reference pixels as a threshold, and a linear model is calculated for each cluster, thereby preventing a decrease in approximation accuracy. Note that the linear model is an example of a prediction model.

Specifically, in MMLM, after two linear models are calculated using luma reference pixels and chroma reference pixels, a linear model used for prediction of a chroma block is selected according to whether a pixel value of a decoded block of luma at a position corresponding to a target chroma block is larger than a threshold. Each prediction pixel of the chroma block is generated while switching the linear model for each pixel of the decoded block of luma at the position corresponding to the target chroma block.

PRIOR ART DOCUMENTS

NON-PATENT DOCUMENTS

Non-Patent Document 1 JVET-D0110 "Enhanced Cross-component Linear Model Intra-prediction"

SUMMARY OF INVENTION

A prediction device according to a first aspect is a prediction device configured to perform prediction in units of blocks obtained by dividing an image, comprising: a generator configured to select a prediction process to be applied from among a plurality of prediction processes by threshold determination for each area to be predicted in the block to generate a prediction area; a determiner configured to estimate or identify a specific area to which a prediction process different from a prediction process applied to surrounding prediction areas is applied, among the prediction areas generated in the block by the generator; and a corrector configured to perform a correction process using another area on the specific area estimated or identified by the determiner.

An encoding device according to a second aspect comprises the prediction device according to the first aspect.

A decoding device according to a third aspect comprises the prediction device according to the first aspect.

A program according to a fourth aspect causes a computer to function as the prediction device according to the first aspect.

BRIEF DESCRIPTION OF DRAWINGS

Fig. 1 is a diagram showing a configuration of an encoding device according to an embodiment.

Fig. 2 is a diagram for explaining an example of an intra prediction mode according to the embodiment.

Fig. 3 is a diagram for explaining an overview of MMLM according to the embodiment.

Fig. 4 is a diagram for explaining an overview of MMLM according to the embodiment.

Fig. 5 is a diagram for explaining an overview of MMLM according to the embodiment.

Fig. 6 is a diagram for explaining an overview of MMLM according to the embodiment.

Fig. 7 is a diagram showing a configuration of an intra predictor on an encoding side according to the embodiment.

Fig. 8 is a diagram showing an operation example of an MMLM predictor, an isolated pixel determiner, and an isolated pixel corrector regarding a first isolated pixel determination operation according to the embodiment.

Fig. 9 is a diagram showing an operation example of an MMLM predictor, an isolated pixel determiner, and an isolated pixel corrector regarding a second isolated pixel determination operation according to the embodiment.

Fig. 10 is a diagram showing a configuration of a decoding device according to the embodiment.

Fig. 11 is a diagram showing a configuration of an intra predictor on a decoding side according to the embodiment.

Fig. 12 is a diagram showing an operation example of the intra predictor on the decoding side according to the embodiment.

DESCRIPTION OF EMBODIMENTS

In MMLM, when a pixel value of a decoded block of luma at a position corresponding to a pixel to be predicted in a chroma block is near a threshold, a prediction model different from a prediction model applied to a surrounding area (surrounding pixels) of an area (pixel) to be predicted is applied to the area (pixel) to be predicted, and there is a possibility that a specific area (hereinafter, also referred to as an "isolated pixel") to which a prediction model different from that of the surrounding area (pixel) is applied is generated. Note that, in the following embodiments, an example in which the prediction model is a linear model will be mainly described, but the prediction model is not limited to the linear model and may be a non-linear model.

Since such a specific area (isolated pixel) causes discontinuity of prediction pixels because the prediction model used for prediction is different from that of the surrounding area (pixel), there is a risk that coding performance deteriorates due to the discontinuity. Such a problem may occur not only in MMLM but also in other coding tools capable of switching prediction processes in units of areas (pixels).

Therefore, the present disclosure provides a prediction device, an encoding device, a decoding device, and a program that suppress deterioration in coding performance due to discontinuity of prediction pixels even when prediction processes can be switched in units of areas (pixels).

The prediction device according to the present disclosure is a device configured to perform prediction in units of blocks obtained by dividing an image. The prediction device comprises: a generator configured to select a prediction process to be applied from among a plurality of prediction processes by threshold determination for each area to be predicted in the block to generate a prediction area; a determiner configured to estimate or identify a specific area to which a prediction process different from a prediction process applied to surrounding prediction areas is applied, among the prediction areas generated in the block by the generator; and a corrector configured to perform a correction process using another area on the specific area estimated or identified by the determiner.

In the embodiment, the "area" is one pixel, and the "area to be predicted" is a pixel to be predicted. However, the "area" may be a pixel group consisting of two or more contiguous pixels. The "pixel to be predicted" in the following embodiments may be read as a "pixel group to be predicted".

Further, in the embodiment, the "specific area to which a prediction process different from a prediction process applied to surrounding prediction areas is applied" is a pixel (isolated pixel) to which a prediction process different from a prediction process applied to surrounding prediction pixels is applied. However, the "specific area to which a prediction process different from a prediction process applied to surrounding prediction areas is applied" may be a pixel group consisting of two or more contiguous pixels, and the "isolated pixel" in the following embodiments may be read as an "isolated pixel group".

With reference to the drawings, an encoding device and a decoding device comprising an intra prediction device according to embodiments will be described. The encoding device and the decoding device perform encoding and decoding of video (i.e., moving images) represented by MPEG, respectively. In the following description of the drawings, the same or similar parts are denoted by the same or similar reference numerals.

(1) Encoding Device

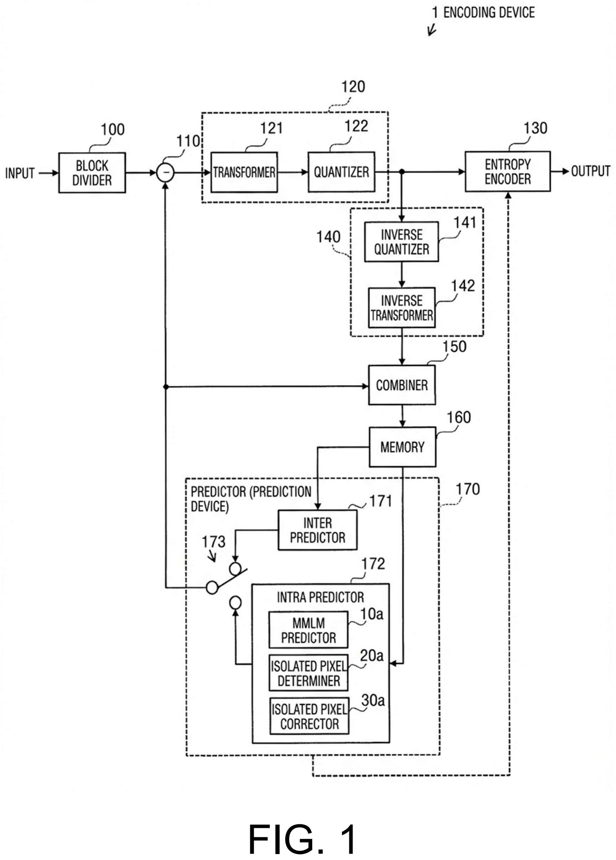

With reference to FIGS. 1 to 9, an encoding device according to the present embodiment will be described.

(1.1) Configuration of Encoding Device

First, a configuration of an encoding device 1 according to the present embodiment will be described. FIG. 1 is a diagram showing the configuration of the encoding device 1 according to the present embodiment.

The encoding device 1 is a device configured to encode an input image to generate a bitstream and output the bitstream. The encoding device 1 includes a block divider 100, a subtractor 110, a transformer/quantizer 120, an entropy encoder 130, an inverse quantizer/inverse transformer 140, a combiner 150, a memory 160, and a predictor 170.

The block divider 100 divides an original image, which is an input image in units of frames (or pictures) constituting a moving image, into a plurality of image blocks, and outputs the image blocks obtained by the dividing to the subtractor 110. The size of the image block is, for example, 32×32 pixels, 16×16 pixels, 8×8 pixels, or 4×4 pixels. The shape of the image block is not limited to a square but may be a rectangle (non-square). The image block is a unit for which the encoding device 1 performs encoding and a unit for which the decoding device performs decoding. Such an image block is also referred to as a coding block (CU).

The input image is composed of luma signals (Y) and chroma signals (Cb, Cr), and each pixel in the input image is composed of a luma component (Y) and chroma components (Cb, Cr). The encoding device 1 supports, for example, three chroma formats: 4:4:4, 4:2:2, and 4:2:0. The block divider 100 outputs a luma block by performing block dividing on the luma signal, and outputs a chroma block by performing block dividing on the chroma signal. The shape of the block dividing may be the same for the luma signal and the chroma signal, or the dividing shape may be controllable independently for the luma signal and the chroma signal.

The subtractor 110 calculates a prediction residual representing a difference (error) between the coding block output by the block divider 100 and a prediction block obtained by predicting the coding block by the predictor 170. Specifically, the subtractor 110 calculates the prediction residual by subtracting each pixel value of the prediction block from each pixel value of the block, and outputs the calculated prediction residual to the transformer/quantizer 120.

The transformer/quantizer 120 performs a transform process and a quantization process in units of blocks. The transformer/quantizer 120 includes a transformer 121 and a quantizer 122.

The transformer 121 performs a transform process on the prediction residual output by the subtractor 110 to calculate transform coefficients, and outputs the calculated transform coefficients to the quantizer 122. The transform refers to, for example, Discrete Cosine Transform (DCT), Discrete Sine Transform (DST), Karhunen Loeve Transform (KLT), or the like. The transform process includes a transform skip in which the transform process is not performed. The transform skip includes a transform in which the transform process is applied only horizontally or a transform in which the transform process is applied only vertically. Further, the transformer 121 may perform a secondary transform process of further applying a transform process to the transform coefficients obtained by the transform process. The secondary transform process may be applied only to a partial area of the transform coefficients.

The quantizer 122 quantizes the transform coefficients output by the transformer 121 using quantization parameters and a quantization matrix, and outputs quantized transform coefficients, which are the quantized transform coefficients, to the entropy encoder 130 and the inverse quantizer/inverse transformer 140. Note that the quantization parameter is a parameter commonly applied to each transform coefficient in the block and is a parameter determining roughness of quantization. The quantization matrix is a matrix having a quantization value used when quantizing each transform coefficient as an element.

The entropy encoder 130 performs entropy encoding on the quantized transform coefficients output by the quantizer 122, performs data compression to generate a bitstream, and outputs the bitstream to the outside of the encoding device 1. For the entropy encoding, Huffman coding, CABAC (Context-based Adaptive Binary Arithmetic Coding), or the like can be used. Note that information regarding prediction (flag or index) is input from the predictor 170 to the entropy encoder 130, and the entropy encoder 130 also performs encoding and bitstream output of the input information.

The inverse quantizer/inverse transformer 140 performs an inverse quantization process and an inverse transform process in units of blocks. The inverse quantizer/inverse transformer 140 includes an inverse quantizer 141 and an inverse transformer 142.

The inverse quantizer 141 performs an inverse quantization process corresponding to the quantization process performed by the quantizer 122. Specifically, the inverse quantizer 141 reconstructs the transform coefficients by inversely quantizing the quantized transform coefficients output by the quantizer 122 using the quantization parameters and the quantization matrix, and outputs the reconstructed transform coefficients to the inverse transformer 142.

The inverse transformer 142 performs an inverse transform process corresponding to the transform process performed by the transformer 121. For example, when the transformer 121 performs the discrete cosine transform, the inverse transformer 142 performs an inverse discrete cosine transform. The inverse transformer 142 reconstructs the prediction residual by performing the inverse transform process on the transform coefficients output by the inverse quantizer 141, and outputs a reconstructed prediction residual, which is the reconstructed prediction residual, to the combiner 150.

The combiner 150 combines the reconstructed prediction residual output by the inverse transformer 142 and the prediction block output by the predictor 170 by adding them in units of pixels. The combiner 150 decodes (reconstructs) the block by adding each pixel value of the reconstructed prediction residual and each pixel value of the prediction block, and outputs the reconstructed block to the memory 160. Hereinafter, the reconstructed block is also referred to as a decoded block.

The memory 160 stores the reconstructed block output by the combiner 150, and accumulates the reconstructed block as a decoded image in units of frames. The memory 160 outputs the stored reconstructed block or decoded image to the predictor 170. Note that a loop filter may be provided between the combiner 150 and the memory 160.

The predictor 170 performs prediction in units of blocks. The predictor 170 includes an inter predictor 171, an intra predictor 172, and a switcher 173.

The inter predictor 171 calculates a motion vector by a method such as block matching using the decoded image stored in the memory 160 as a reference image, predicts the coding block to generate an inter prediction block, and outputs the generated inter prediction block to the switcher 173. Herein, the inter predictor 171 selects an optimal inter prediction method from among inter prediction using a plurality of reference images (typically, bi-prediction) and inter prediction using one reference image (uni-directional prediction), and performs inter prediction using the selected inter prediction method. The inter predictor 171 outputs information regarding inter prediction (motion vector, etc.) to the entropy encoder 130.

The intra predictor 172 generates an intra prediction block with reference to decoded pixels around the block among the decoded images stored in the memory 160, and outputs the generated intra prediction block to the switcher 173. Generally, the intra predictor 172 selects an intra prediction mode to be applied to a prediction coding block of intra prediction from among a plurality of intra prediction modes, and predicts the coding block of intra prediction using the selected intra prediction mode. The intra predictor 172 outputs information regarding the selected intra prediction mode to the entropy encoder 130.

The switcher 173 switches between the inter prediction block output by the inter predictor 171 and the intra prediction block output by the intra predictor 172, and outputs one of the prediction blocks to the subtractor 110 and the combiner 150.

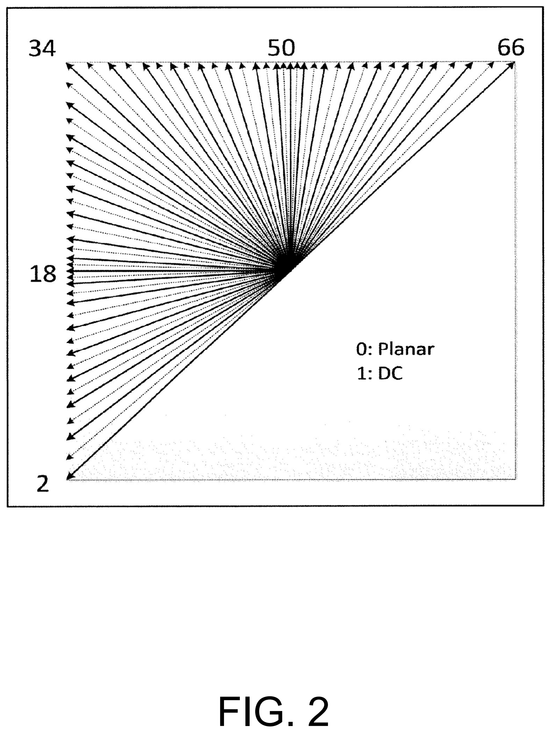

FIG. 2 is a diagram for explaining an example of the intra prediction mode according to the present embodiment. The intra predictor 172 performs intra prediction on the coding block. In the illustrated example, candidates for the intra prediction mode of the luma block are Planar prediction, DC prediction, and 65 types of angular prediction (Directional prediction), which are a total of 67 types of intra prediction modes.

Mode 0 of the prediction mode is Planar prediction, mode 1 of the prediction mode is DC prediction, and modes 2 to 66 of the prediction mode are angular prediction (Intra Angular). In the angular prediction, a direction of an arrow indicates a prediction direction (reference direction), a starting point of the arrow indicates a position of a pixel to be predicted, and an ending point of the arrow indicates a position of a reference pixel used for prediction of this pixel to be predicted (also referred to as a "reference pixel position"). A total of 65 modes are prepared for the angular prediction, and selectable prediction directions are determined by the shape (aspect ratio) of the block. Note that, in the illustrated example, the angular prediction is assumed to be 65 directions, but the angular prediction may be more than 65 directions or less than 65 directions.

As prediction directions parallel to a diagonal line passing through an upper right vertex and a lower left vertex of the block, there are mode 2 which is a prediction mode referring to a lower left direction and mode 66 which is a prediction mode referring to an upper right direction, and mode numbers are assigned every predetermined angle clockwise from mode 2 to mode 66. Mode 34 is a prediction mode referring to an upper left direction. Specifically, when the horizontal direction is 0°, the prediction direction of mode 2 is -45°, the prediction direction of mode 18 is 0°, the prediction direction of mode 34 is 45°, the prediction direction of mode 50 is 90°, and the prediction direction of mode 66 is 135°. Note that mode 18 is also referred to as horizontal prediction, and mode 50 is also referred to as vertical prediction.

Herein, each angular prediction less than mode 34, that is, modes 2 to 33, is angular prediction referring to the left side of the coding block, and the prediction direction thereof is the left side direction of the coding block. On the other hand, each angular prediction larger than mode 34, that is, modes 35 to 66, is angular prediction referring to the upper side of the coding block, and the prediction direction thereof is the upper side direction of the coding block.

On the other hand, the number of candidates for the intra prediction mode of the chroma block is smaller than the number of candidates for the intra prediction mode of the luma block. Specifically, in the intra prediction of the chroma block, the intra predictor 172 determines the intra prediction mode used for the intra prediction of the luma block at a position corresponding to the position of the chroma block as a first candidate mode, determines a second candidate mode that does not overlap with the first candidate mode, and selects an intra prediction mode used for the intra prediction of the chroma block from among these candidate modes. Such a first candidate mode is referred to as DM (Direct Mode or Derived Mode).

Further, when any one of default modes predetermined as the second candidate mode overlaps with the first candidate mode (DM), the intra predictor 172 may determine an alternative mode used as the second candidate mode instead of the overlapping default mode. Herein, the default modes are Planar mode (mode 0), Vertical mode (mode 50), Horizontal mode (mode 18), and DC mode (mode 1). As the alternative mode, a fixed intra prediction mode other than the default mode, for example, mode 66 is used.

Note that the luma block at the position corresponding to the position of the chroma block refers to a luma block at the same position as the position of the chroma block when the block dividing shape of the luma block and the chroma block is the same. However, when the block dividing shape of luma and the block dividing shape of chroma can be controlled independently, the luma block at the position corresponding to the position of the chroma block refers to a luma block including coordinates corresponding to a predefined pixel position in the chroma block (for example, coordinates of the upper left of the chroma block, etc.). Herein, coordinates corresponding to the predefined pixel position in the chroma block are not necessarily the same coordinates because sizes of luma and chroma may be different in a chroma format such as 4:2:0.

Furthermore, as an intra prediction mode specific to the chroma block, there is cross-component prediction that predicts the chroma block from a decoded luma block at a position corresponding to the position of the chroma block using a linear model calculated from respective reference pixels of luma and chroma around the chroma block to be predicted. In the present embodiment, MMLM is used as the cross-component prediction.

(1.2) Overview of MMLM

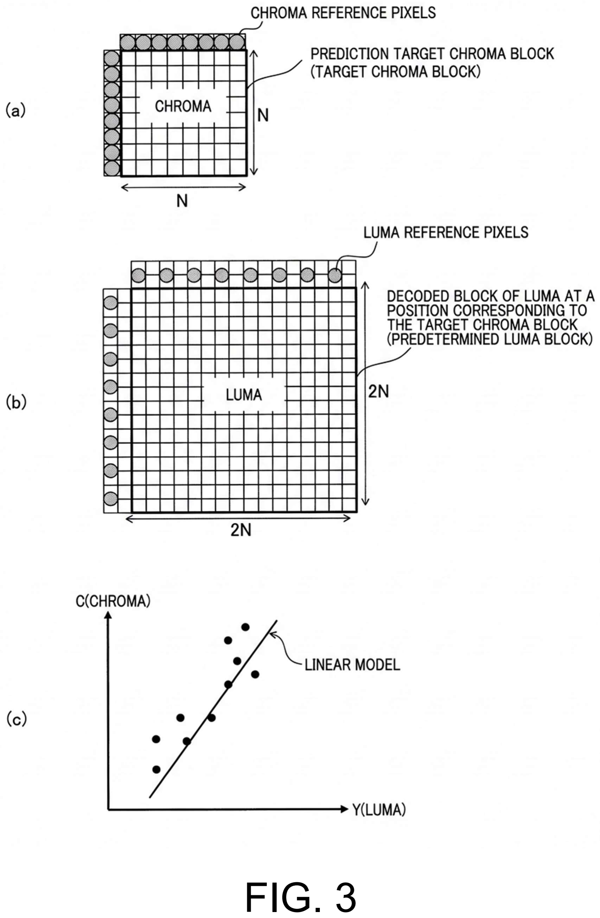

Next, with reference to FIGS. 3 to 6, an overview of MMLM according to the present embodiment will be described. MMLM is an extension technology of CCLM which is cross-component prediction adopted in VVC. The intra predictor 172 according to the present embodiment performs intra prediction supporting MMLM.

As shown in FIG. 3, CCLM is a mode for predicting a corresponding chroma block (FIG. 3(a)) using a decoded block of luma (FIG. 3(b)), and predicts prediction pixels of a target chroma block from a decoded block of luma at a corresponding position using a linear model (FIG. 3(c)). Herein, a reduced block obtained by downsampling the decoded block of luma according to a chroma format may be used. The linear model is calculated by the least mean squares using decoded pixels adjacent to the target chroma block (chroma reference pixels) and decoded pixels adjacent to the decoded block of luma at the corresponding position (luma reference pixels).

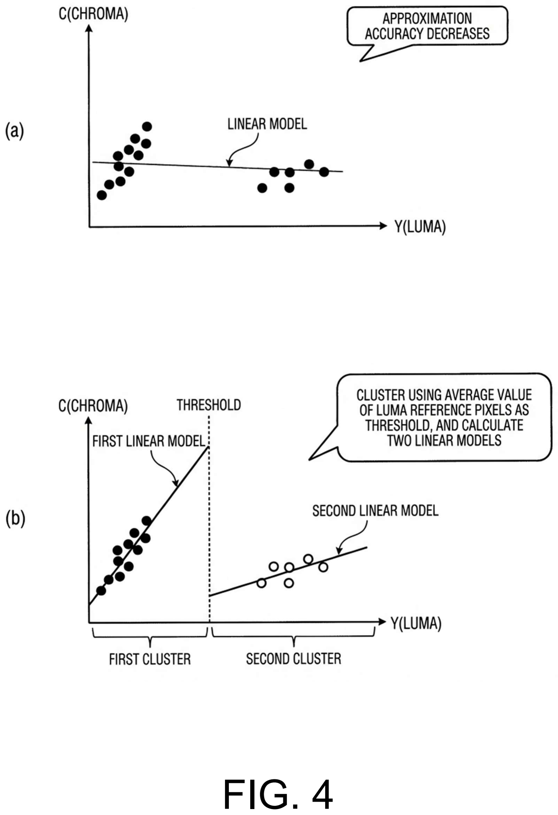

In CCLM, it is premised that distribution of luma and chroma signals in a block has a certain tendency. Therefore, as shown in FIG. 4(a), when the distribution of luma and chroma signals includes a plurality of tendencies, such as when an object boundary exists in the block, there is a problem that approximation accuracy significantly decreases.

Therefore, in MMLM, as shown in FIG. 4(b), a plurality of distributions are assumed, and the distribution of luma and chroma signals is clustered using, for example, an average value of luma reference pixels as a threshold, and a linear model is calculated for each cluster, thereby preventing a decrease in approximation accuracy. Specifically, in MMLM, after two linear models (a first linear model and a second linear model) are calculated using luma reference pixels and chroma reference pixels, a linear model used for prediction of a chroma block is selected according to whether a pixel value of a decoded block of luma at a position corresponding to a target chroma block is larger than a threshold. Each prediction pixel of the chroma block is generated while switching the linear model for each pixel of the decoded block of luma at the position corresponding to the target chroma block.

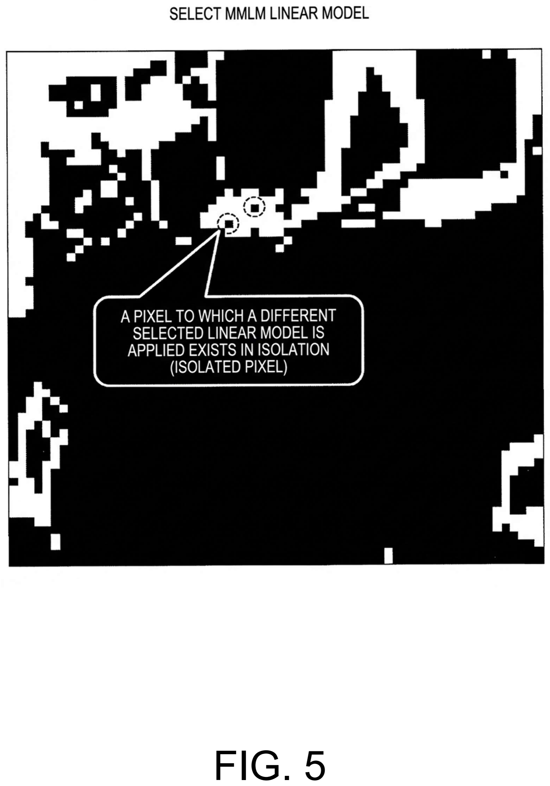

However, as shown in FIG. 5, in MMLM, when a pixel value of a decoded block of luma at a position corresponding to a pixel to be predicted in a chroma block is near a threshold, a linear model different from a linear model applied to surrounding pixels of the pixel to be predicted in the chroma block is applied to the pixel to be predicted, and there is a possibility that an isolated pixel to which a linear model different from that of the surrounding pixels is applied is generated.

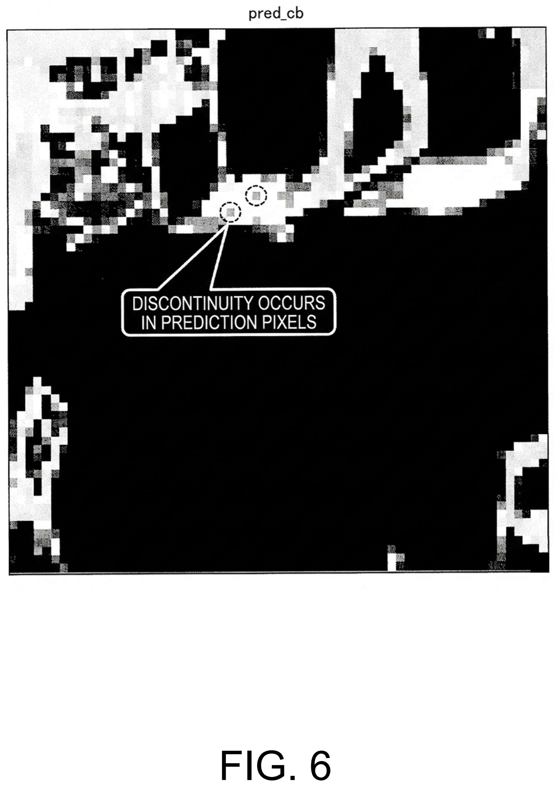

As shown in FIG. 6, since such an isolated pixel causes discontinuity of a chroma prediction pixel (pred_cb) because the linear model used for prediction is different from that of the surrounding pixels, there is a risk that coding performance deteriorates due to the discontinuity.

In the present embodiment, when predicting pixels in a target chroma block by MMLM, the intra predictor 172 estimates a pixel whose pixel value of a corresponding decoded pixel of luma is a value close to a threshold as an isolated pixel, and performs a correction process on the estimated isolated pixel. For example, the correction process is a filtering process using surrounding prediction pixels.

Whether or not the pixel value of the corresponding decoded pixel of luma is a value close to the threshold may be determined by whether or not the pixel value of the corresponding decoded pixel of luma is included in a range of threshold ± variation value based on a variation value predetermined by the system, or may be determined according to a feature amount of distribution of pixel values in the decoded block of luma such as an average value or a variance value of pixel values of decoded pixels in the block.

Alternatively, in addition to the determination of whether the pixel value is a value near the threshold as described above, the intra predictor 172 may determine whether to perform the filtering process according to which linear model of the two types is applied to pixels near the pixel. For example, when it is determined that a prediction process is performed on the pixel using the first linear model and it is determined that the prediction process is performed using the second linear model on at least a predetermined number of pixels among eight pixels near the pixel, the pixel may be identified as an isolated pixel and it may be determined to apply the filtering process to the isolated pixel.

Furthermore, the same filtering process may be applied to pixels near the pixel determined as an isolated pixel.

(1.3) Configuration of Intra Predictor

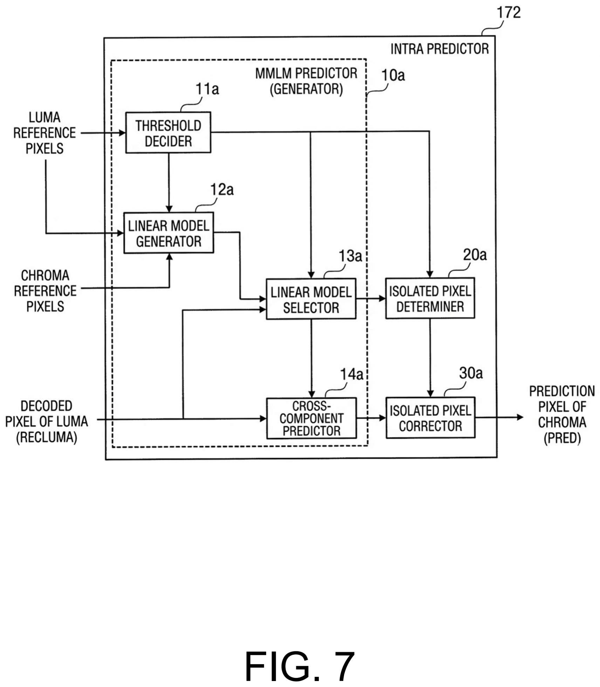

Next, with reference to FIGS. 1 and 7, a configuration of the intra predictor 172 according to the present embodiment will be described. The intra predictor 172 corresponds to a prediction device that performs prediction in units of blocks obtained by dividing an image.

As shown in FIG. 1, the intra predictor 172 includes an MMLM predictor 10a, an isolated pixel determiner 20a, and an isolated pixel corrector 30a.

The MMLM predictor 10a corresponds to a generator configured to select a prediction process to be applied from among a plurality of prediction processes by threshold determination for each pixel to be predicted (also referred to as a "target pixel") in a block to be predicted (also referred to as a "target block") to generate a prediction pixel. The isolated pixel determiner 20a corresponds to a determiner configured to estimate or identify an isolated pixel to which a prediction process different from a prediction process applied to surrounding prediction pixels is applied, among prediction pixels generated in the target block by the MMLM predictor 10a. The isolated pixel corrector 30a corresponds to a corrector configured to perform a correction process using at least one of prediction pixels in the target block and decoded pixels outside the target block on the isolated pixel estimated or identified by the isolated pixel determiner 20a.

In this way, the intra predictor 172 estimates or identifies an isolated pixel to which a prediction process different from a prediction process applied to surrounding prediction pixels is applied among prediction pixels generated in the target block, and performs a correction process using at least one of prediction pixels in the block and decoded pixels outside the block on the isolated pixel. Since such a correction process can suppress discontinuity of prediction pixels caused by isolated pixels, deterioration in coding performance due to discontinuity of prediction pixels can be suppressed.

In the present embodiment, the target block is a chroma block (also referred to as a "target chroma block"). Each of the plurality of prediction processes used by the MMLM predictor 10a is a process of predicting pixels in the target chroma block by a linear model generated using chroma reference pixels around the target chroma block and luma reference pixels around a predetermined luma block at a position corresponding to the target chroma block. Herein, the plurality of prediction processes differ in the linear model.

FIG. 7 is a diagram showing the configuration of the intra predictor 172 according to the present embodiment. As shown in FIG. 7, the MMLM predictor 10a includes a threshold decider 11a, a linear model generator 12a, a linear model selector 13a, and a cross-component predictor 14a.

The threshold decider 11a decides one or a plurality of thresholds used for selection of a linear model from the luma reference pixels. In the present embodiment, the threshold decider 11a decides one threshold. Specifically, the threshold decider 11a decides a threshold used for linear model selection from luma reference pixels adjacent to a luma block at a position corresponding to the target chroma block.

Herein, the threshold decider 11a may decide the threshold by, for example, an average value of the luma reference pixels, or may determine the threshold by another clustering method. Further, the threshold decider 11a may decide the threshold using the luma reference pixels as they are, or may use pixels subjected to subsampling processing, filtering processing, or the like to correspond to pixel positions of the chroma reference pixels as the luma reference pixels. For example, when the chroma format is the 4:2:0 format, the luma signal has an area twice as large as the chroma signal vertically and horizontally (see FIG. 3). Therefore, as shown in FIG. 3(b), the threshold decider 11a can align the positions of the luma reference pixels with the positions of the chroma reference pixels by performing low-pass filter processing on the luma reference pixels and then performing subsampling processing every two pixels vertically and horizontally.

The linear model generator 12a generates a linear model for each cluster determined by the threshold determined by the threshold decider 11a. That is, the linear model generator 12a generates a plurality of linear models using the threshold determined by the threshold decider 11a.

In the present embodiment, as shown in FIG. 4(b), the linear model generator 12a identifies luma reference pixels whose pixel values are equal to or less than the threshold (or less than the threshold), and generates a first linear model using chroma reference pixels at positions corresponding to the identified luma reference pixels. Further, the linear model generator 12a identifies luma reference pixels whose pixel values are larger than the threshold (or equal to or larger than the threshold), and generates a second linear model using chroma reference pixels at positions corresponding to the identified luma reference pixels.

Herein, the linear model can be expressed by, for example,

$Pred\_c = a * Rec\_y + b$. However, Pred_c means a prediction pixel of chroma, and Rec_y means a decoded pixel of luma at a corresponding position. a and b are coefficients, and the linear model generator 12a can set different values for a and b in the first linear model and the second linear model, respectively.

In order to calculate the coefficients a and b, the linear model generator 12a generates the first linear model and the second linear model by calculating coefficients a and b such that $arg\ min\_\{a,b\}\ [Ref\_c - (a * Ref\_1 + b)]$ using chroma reference pixels (Ref_c) adjacent to the target chroma block and luma reference pixels (Ref_1) at positions corresponding to the chroma reference pixels.

The linear model selector 13a selects a linear model used for prediction of a chroma pixel (target pixel) by comparing a pixel value of a corresponding luma pixel in a predetermined luma block with a threshold for each chroma pixel in the target chroma block. That is, the linear model selector 13a selects a linear model used for prediction of the target pixel in the target chroma block based on a pixel value of a decoded pixel of the luma block at a position corresponding to the target pixel in the target chroma block.

Specifically, the linear model selector 13a selects which linear model among the linear models generated by the linear model generator 12a is used for generation of a prediction pixel for each target pixel of the target chroma block. Herein, for each target pixel in the target chroma block, the linear model selector 13a selects a linear model used for cross-component prediction according to whether or not a pixel value of a decoded pixel of luma at a position corresponding to the target pixel is equal to or less than (or less than) the threshold.

For example, when the pixel value of the decoded pixel of luma corresponding to the target pixel in the target chroma block is equal to or less than (or less than) the threshold, the linear model selector 13a determines to use the first linear model for cross-component prediction of the target pixel in the target chroma block. On the other hand, when the pixel value of the decoded pixel of luma corresponding to the target pixel in the target chroma block is larger than (or equal to or larger than) the threshold, the linear model selector 13a determines to use the second linear model for cross-component prediction of the target pixel in the target chroma block.

Note that the linear model selector 13a may perform linear model selection for each pixel using the decoded pixel of luma as it is, or may use a pixel subjected to subsampling processing, filtering processing, or the like on the decoded pixel of luma to correspond to the position of the target pixel in the target chroma block for linear model selection. For example, when the chroma format is the 4:2:0 format, the luma block has an area twice as large as the chroma block vertically and horizontally. Therefore, the linear model selector 13a can align the position of the decoded pixel of luma with the position of the target pixel in the target chroma block by performing low-pass filter processing on the decoded pixel of luma and then performing subsampling processing every two pixels vertically and horizontally.

The cross-component predictor 14a predicts the target pixel in the target chroma block by cross-component prediction using the linear model selected by the linear model selector 13a, and generates a prediction pixel of the target pixel. That is, the cross-component predictor 14a performs cross-component prediction for each target pixel in the target chroma block based on the linear model selected for each target pixel in the target chroma block by the linear model selector 13a, and generates a prediction pixel for each target pixel in the target chroma block. Specifically, the cross-component predictor 14a generates a prediction pixel by switching coefficients a and b of the linear model to be applied for each target pixel in the target chroma block.

The isolated pixel determiner 20a estimates or identifies an isolated pixel to which a prediction process different from a prediction process applied to surrounding prediction pixels is applied among prediction pixels generated in the target chroma block by the cross-component predictor 14a. The operation of the isolated pixel determiner 20a includes a first isolated pixel determination operation or a second isolated pixel determination operation described later. Details of such operations will be described later.

The isolated pixel corrector 30a performs a correction process using prediction pixels in the target block on the isolated pixel estimated or identified by the isolated pixel determiner 20a. In the present embodiment, the isolated pixel corrector 30a performs a filtering process using prediction pixels around the isolated pixel on the isolated pixel as the correction process. Details of the operation of the isolated pixel corrector 30a will be described later. In the present embodiment, the isolated pixel corrector 30a performs the filtering process on the isolated pixel among prediction pixels generated in the target chroma block by the cross-component predictor 14a, but does not perform the filtering process on other prediction pixels. Thereby, it is possible to prevent a situation in which image quality deteriorates due to unnecessary filtering process.

(1.4) Operations of Isolated Pixel Determiner and Isolated Pixel Corrector

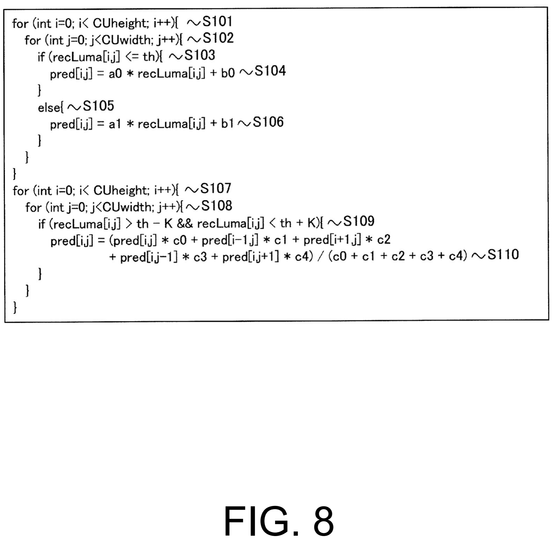

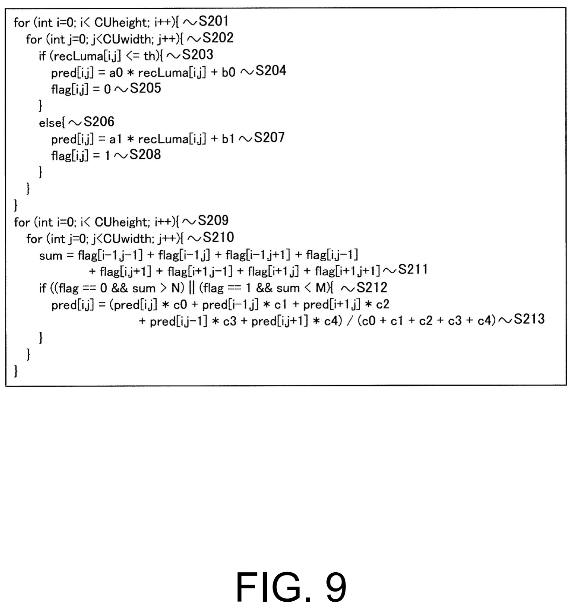

Next, with reference to FIGS. 8 and 9, operations of the isolated pixel determiner 20a and the isolated pixel corrector 30a according to the present embodiment will be described.

(1.4.1) First Isolated Pixel Determination Operation

The MMLM predictor 10a selects a prediction process to be applied to a target pixel by comparing a corresponding pixel value (specifically, a pixel value of a luma decoded pixel at a corresponding position) with a threshold for each target pixel in the target chroma block.

In the first isolated pixel determination operation, the isolated pixel determiner 20a estimates a pixel whose corresponding pixel value is near the threshold among target pixels in the target chroma block as an isolated pixel. The isolated pixel corrector 30a controls the filtering process according to whether or not the corresponding pixel value is near the threshold for each target pixel in the target chroma block.

That is, in the first isolated pixel determination operation, regarding the correction process for each target pixel in the target chroma block, the isolated pixel determiner 20a controls whether to perform the filtering process according to the value of the decoded pixel of luma at the corresponding position. As described above, when the values of the decoded pixels of luma are concentrated around the value of the threshold determined by the threshold decider 11a, there is a high possibility that an isolated pixel to which a linear model different from that of surrounding pixels is applied is generated.

Therefore, in the first isolated pixel determination operation, when the value of the decoded pixel of luma becomes a value near the threshold determined by the threshold decider 11a, the isolated pixel determiner 20a and the isolated pixel corrector 30a estimate a prediction pixel of chroma at a position corresponding to the decoded pixel of luma as an isolated pixel, and perform control to perform the filtering process on the isolated pixel. By performing such a filtering process, it becomes possible to suppress discontinuity caused by performing a prediction process using a linear model different from that of the surroundings for the isolated pixel. For example, regarding determination of an isolated pixel, when the threshold is th and the value of the decoded pixel of luma is

$$\text{rec\_L, if rec\_L} > \text{th - K \&\& rec\_L} < \text{th + K}$$

is satisfied, it may be configured to apply the filtering process assuming that there is a possibility of being an isolated pixel.

Herein, K is a constant of 0 or more representing a range of determination (in the case of 0, control can be performed so that the filtering process is not applied), and may be predetermined by the system, or may be determined according to block size, block shape, and/or feature amount such as average/variance for pixel values in the decoded luma block. The feature amount is not limited to average/variance, and any index representing a feature of distribution of pixels in the decoded luma block can be used. Further, the constant K may be determined by at least one of a surrounding prediction mode, a frame type (I slice, B slice, P slice), and a reference structure.

FIG. 8 is a diagram showing an operation example of the MMLM predictor 10a, the isolated pixel determiner 20a, and the isolated pixel corrector 30a regarding the first isolated pixel determination operation according to the present embodiment.

In steps S101 and S102, when the height of the target chroma block is CUheight and the width of the target chroma block is CUwidth, the MMLM predictor 10a performs the following loop processing for each target pixel [i,j] in the target chroma block.

Specifically, in step S103, the MMLM predictor 10a determines whether or not a pixel value recLuma[i,j] of a decoded pixel of luma at a position corresponding to the target pixel [i,j] in the target chroma block is equal to or less than a threshold th. When the pixel value recLuma[i,j] of the decoded pixel of luma is equal to or less than the threshold th, in step S104, the MMLM predictor 10a calculates a prediction pixel value pred[i,j] of chroma from the pixel value recLuma[i,j] of the decoded pixel of luma using the first linear model:

$$\text{pred[i,j]} = \text{a0} * \text{recLuma[i,j]} + \text{b0}.$$

On the other hand, when the pixel value recLuma[i,j] of the decoded pixel of luma is larger than the threshold th (step S105), in step S106, the MMLM predictor 10a calculates a prediction pixel value pred[i,j] of chroma from the pixel value recLuma[i,j] of the decoded pixel of luma using the second linear model:

$$\text{pred[i,j]} = \text{a1} * \text{recLuma[i,j]} + \text{b1}.$$

Thereafter, in steps S107 and S108, when the height of the target chroma block is CUheight and the width of the target chroma block is CUwidth, the isolated pixel determiner 20a and the isolated pixel corrector 30a perform the following loop processing for each target pixel [i,j] in the target chroma block.

Specifically, in step S109, the isolated pixel determiner 20a determines whether or not the pixel value recLuma[i,j] of the decoded pixel of luma is within a predetermined range ($\pm$K) based on the threshold th. In other words, the isolated pixel determiner 20a determines whether or not the pixel value recLuma[i,j] of the decoded pixel of luma is near the threshold th. That is, the isolated pixel determiner 20a determines whether or not the pixel value recLuma[i,j] of the decoded pixel of luma is larger than the threshold th-K and smaller than the threshold th+K.

When the pixel value recLuma[i,j] of the decoded pixel of luma is near the threshold th, the corresponding prediction pixel pred[i,j] of chroma can be estimated to be an isolated pixel. In this case, in step S110, the isolated pixel corrector 30a performs a filtering process of

pred[i,j] = (pred[i,j] * c0 + pred[i-1,j] * c1 + pred[i+1,j] * c2 + pred[i,j-1] * c3 + pred[i,j+1] * c4) / (c0 + c1 + c2 + c3 + c4) on the prediction pixel pred[i,j] of chroma using prediction pixels around the prediction pixel pred[i,j] of chroma (in the illustrated example, pred[i-1,j], pred[i+1,j], pred[i,j-1], and pred[i,j+1]). Herein, each of c0, c1, c2, c3, and c4 is a filter coefficient (weighting coefficient), and may be predetermined by the system or may be variably settable. By such a filtering process, discontinuity between the isolated pixel and prediction pixels around it can be suppressed.

Note that an example in which the surrounding prediction pixels used for the filtering process are four pixels on the top, bottom, left, and right (pred[i-1,j], pred[i+1,j], pred[i,j-1], pred[i,j+1]) has been described, but the surrounding prediction pixels used for the filtering process are not limited to four. For example, the surrounding prediction pixels used for the filtering process may be eight (pred[i-1,j-1], pred[i-1,j], pred[i-1,j+1], pred[i,j-1], pred[i,j+1], pred[i+1,j-1], pred[i+1,j], pred[i+1,j+1]) by adding prediction pixels in diagonal directions. The same applies to the case of the second isolated pixel determination operation described later.

(1.4.2) Second Isolated Pixel Determination Operation

In the second isolated pixel determination operation, the isolated pixel determiner 20a stores the applied prediction process according to the result of the threshold determination for each target pixel in the target chroma block. Then, the isolated pixel determiner 20a identifies, as an isolated pixel, a pixel to which a first prediction process is applied among target pixels in the target chroma block, and for which a second prediction process different from the first prediction process is applied to at least a predetermined number of surrounding pixels. In the second isolated pixel determination operation, although a storage capacity for storing the prediction process applied to each target pixel in the target chroma block is required, determination of an isolated pixel can be performed with higher accuracy compared to the first isolated pixel determination operation.

In the second isolated pixel determination operation according to the present embodiment, regarding the correction process for each target pixel in the target chroma block, the isolated pixel determiner 20a and the isolated pixel corrector 30a control whether to perform the filtering process according to a linear model applied to the target pixel and linear models applied to prediction pixels located around the target pixel. For example, when the first linear model is applied to pixels around a certain target pixel and the second linear model is applied to the target pixel, the isolated pixel determiner 20a can identify the target pixel as an isolated pixel. The isolated pixel corrector 30a can suppress the above-mentioned discontinuity by applying the filtering process to the identified isolated pixel.

For example, the isolated pixel determiner 20a stores the type of linear model applied to the target pixel (i, j) as flag [i,j]. Herein, it is assumed that flag[i,j]=0 when applying the first linear model, and flag[i,j]=1 when applying the second linear model. The isolated pixel determiner 20a calculates a total sum of linear models applied to surrounding prediction pixels as sum = flag[i-1,j-1] + flag[i-1,j] + flag[i-1,j+1] + flag[i,j-1] + flag[i,j+1] + flag[i+1,j-1] + flag[i+1,j] + flag[i+1,j+1].

The larger the value of sum, the higher the ratio of the second linear model being applied to surrounding prediction pixels. On the other hand, conversely, the smaller the value of sum, the higher the ratio of the first linear model being applied to surrounding pixels.

When the first linear model is applied to a target pixel in the target chroma block (flag[i,j]=0) and the value of sum is larger than a predefined value N, the isolated pixel determiner 20a identifies the target pixel as an isolated pixel, and the filtering process is applied by the isolated pixel corrector 30a. Similarly, when the second linear model is applied to a target pixel in the target chroma block (flag[i,j]=1) and the value of sum is smaller than a predefined value M, the isolated pixel determiner 20a identifies the target pixel as an isolated pixel, and the filtering process is applied by the isolated pixel corrector 30a. In other cases, it is determined that the target pixel is not an isolated pixel, and the filtering process is not applied.

FIG. 9 is a diagram showing an operation example of the MMLM predictor 10a, the isolated pixel determiner 20a,

and the isolated pixel corrector 30a regarding the second isolated pixel determination operation according to the present embodiment.

In steps S201 and S202, when the height of the target chroma block is CUheight and the width of the target chroma block is CUwidth, the MMLM predictor 10a performs the following loop processing for each target pixel [i,j] in the target chroma block.

Specifically, in step S203, the MMLM predictor 10a determines whether or not a pixel value recLuma[i,j] of a decoded pixel of luma at a position corresponding to the target pixel [i,j] in the target chroma block is equal to or less than a threshold th. When the pixel value recLuma[i,j] of the decoded pixel of luma is equal to or less than the threshold th, in step S204, the MMLM predictor 10a calculates a prediction pixel value pred[i,j] of chroma from the pixel value recLuma[i,j] of the decoded pixel of luma using the first linear model:

$$\mathrm{pred}[i,j] = a0 * \mathrm{recLuma}[i,j] + b0.$$

In this case, in step S205, the isolated pixel determiner 20a sets a flag flag[i,j] corresponding to the prediction pixel pred[i,j] to 0 and stores it.

On the other hand, when the pixel value recLuma[i,j] of the decoded pixel of luma is larger than the threshold th (step S206), in step S207, the MMLM predictor 10a calculates a prediction pixel value pred[i,j] of chroma from the pixel value recLuma[i,j] of the decoded pixel of luma using the second linear model:

$$\mathrm{pred}[i,j] = a1 * \mathrm{recLuma}[i,j] + b1.$$

In this case, in step S208, the isolated pixel determiner 20a sets a flag flag[i,j] corresponding to the prediction pixel pred[i,j] to 1 and stores it.

Thereafter, in steps S209 and S210, when the height of the target chroma block is CUheight and the width of the target chroma block is CUwidth, the isolated pixel determiner 20a and the isolated pixel corrector 30a perform the following loop processing for each target pixel [i,j] in the target chroma block.

Specifically, in step S211, the isolated pixel determiner 20a calculates a total sum of linear models applied to surrounding prediction pixels.

Then, in step S212, the isolated pixel determiner 20a determines whether a first condition that the flag corresponding to the target pixel (prediction pixel) [i,j] is 0 and sum is larger than N, or a second condition that the flag corresponding to the target pixel (prediction pixel) [i,j] is 1 and sum is smaller than M is satisfied. When the first condition or the second condition is satisfied, the isolated pixel determiner 20a identifies the target pixel (prediction pixel) [i,j] as an isolated pixel.

Then, in step S213, the isolated pixel corrector 30a performs a filtering process of pred[i,j] = (pred[i,j] * c0 + pred[i-1,j] * c1 + pred[i+1,j] * c2 + pred[i,j-1] * c3 + pred[i,j+1] * c4) / (c0 + c1 + c2 + c3 + c4) on the prediction pixel pred[i,j] identified as an isolated pixel using prediction pixels around the prediction pixel pred[i,j] (in the illustrated example, pred[i-1,j], pred[i+1,j], pred[i,j-1], and pred[i,j+1]).

Herein, each of c0, c1, c2, c3, and c4 is a filter coefficient (weighting coefficient), and may be predetermined by the system or may be variably settable. By such a filtering process, discontinuity between the isolated pixel and prediction pixels around it can be suppressed.

(2) Decoding Device

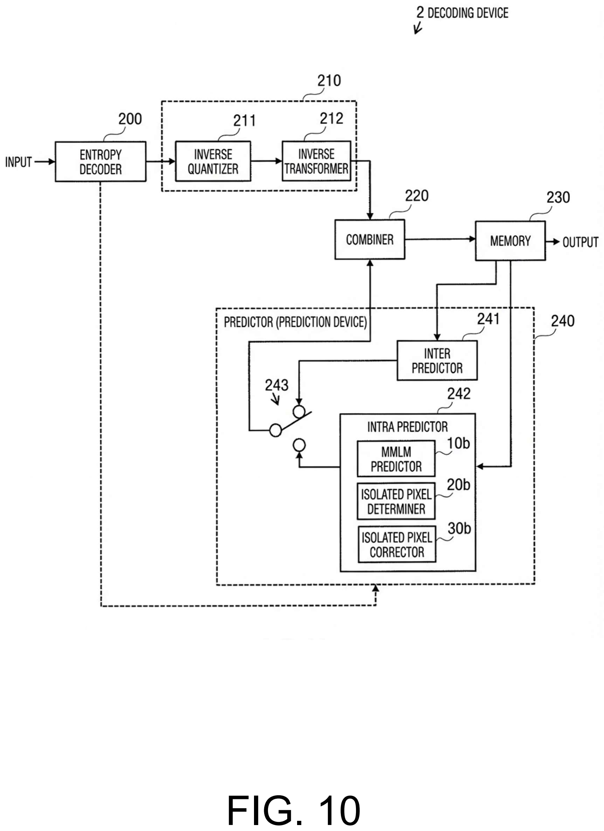

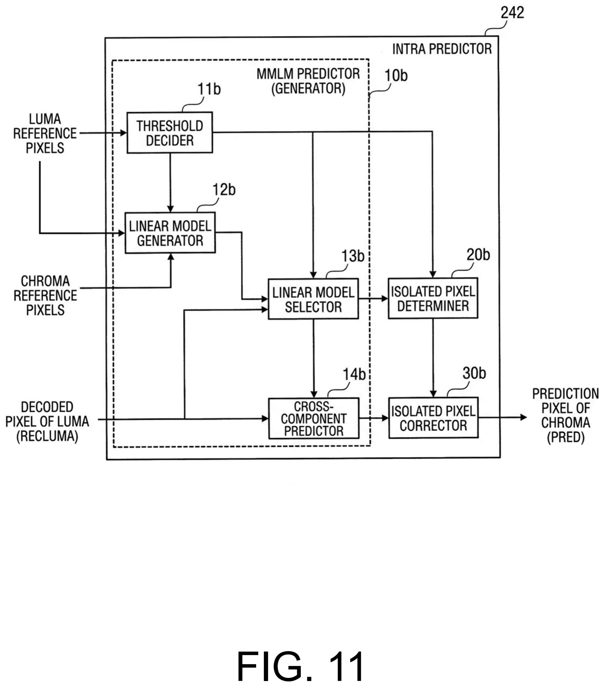

Next, with reference to FIGS. 10 and 11, a decoding device 2 according to the present embodiment will be described.

FIG. 10 is a diagram showing a configuration of the decoding device 2 according to the present embodiment. The decoding device 2 is a device configured to derive a decoded image from an input bitstream and output the decoded image. The decoding device 2 includes an entropy decoder 200, an inverse quantizer/inverse transformer 210, a combiner 220, a memory 230, and a predictor 240.

The entropy decoder 200 decodes the bitstream generated by the encoding device 1, and outputs quantized transform coefficients to the inverse quantizer/inverse transformer 210. Further, the entropy decoder 200 acquires information regarding prediction (intra prediction and inter prediction), and outputs the acquired information to the predictor 240. In the present embodiment, the entropy decoder 200 may acquire a flag indicating application of MMLM, and output the flag to the predictor 240.

The inverse quantizer/inverse transformer 210 performs an inverse quantization process and an inverse transform process in units of blocks. The inverse quantizer/inverse transformer 210 includes an inverse quantizer 211 and an inverse transformer 212.

The inverse quantizer 211 performs an inverse quantization process corresponding to the quantization process performed by the quantizer 122 of the encoding device 1. The inverse quantizer 211 reconstructs transform coefficients of the coding block by inversely quantizing the quantized transform coefficients output by the entropy decoder 200 using quantization parameters and a quantization matrix, and outputs the reconstructed transform coefficients to the inverse transformer 212.

The inverse transformer 212 performs an inverse transform process corresponding to the transform process performed by the transformer 121 of the encoding device 1. The inverse transformer 212 reconstructs a prediction residual by performing an inverse transform process on the transform coefficients output by the inverse quantizer 211, and outputs a reconstructed prediction residual, which is the reconstructed prediction residual, to the combiner 220. The inverse transform process includes a transform skip in which the inverse transform process is not performed. Further, the inverse transformer 212 may perform an inverse secondary transform process of further applying an inverse transform process to a signal obtained by the inverse transform process.

The combiner 220 combines the prediction residual output by the inverse transformer 212 and the prediction block output by the predictor 240 by adding them in units of pixels, decodes (reconstructs) the original block, and outputs a reconstructed block to the memory 230.

The memory 230 stores the reconstructed block output by the combiner 220, and accumulates the reconstructed block as a decoded image in units of frames. The memory 230 outputs the reconstructed block or decoded image to the predictor 240. Further, the memory 230 outputs the decoded image in units of frames to the outside of the decoding device 2. Note that a loop filter may be provided between the combiner 220 and the memory 230.

The predictor 240 performs prediction in units of blocks. The predictor 240 includes an inter predictor 241, an intra predictor 242, and a switcher 243.

The inter predictor 241 predicts the coding block by inter prediction using the decoded image stored in the memory 230 as a reference image. The inter predictor 241 generates an inter prediction block by performing inter prediction according to motion vector information and the like output by the entropy decoder 200, and outputs the generated inter prediction block to the switcher 243.

The intra predictor 242 generates an intra prediction block with reference to decoded pixels around a block to be predicted (coding block) among decoded images stored in the memory 230, and outputs the generated intra prediction block to the switcher 243. The intra predictor 242 according to the present embodiment performs intra prediction supporting the above-mentioned MMLM.

The switcher 243 switches between the inter prediction block output by the inter predictor 241 and the intra prediction block output by the intra predictor 242, and outputs one of the prediction blocks to the combiner 220.

FIG. 11 is a diagram showing a configuration of the intra predictor 242 according to the present embodiment. As shown in FIGS. 10 and 11, the intra predictor 242 includes an MMLM predictor 10b (a threshold determiner 11b, a linear model generator 12b, a linear model selector 13b, and a cross-component predictor 14b), an isolated pixel determiner 20b, and an isolated pixel corrector 30b.

Herein, the MMLM predictor 10b (the threshold determiner 11b, the linear model generator 12b, the linear model selector 13b, and the cross-component predictor 14b), the isolated pixel determiner 20b, and the isolated pixel corrector 30b perform the same processing as the MMLM predictor 10a (the threshold decider 11a, the linear model generator 12a, the linear model selector 13a, and the cross-component predictor 14a), the isolated pixel determiner 20a, and the isolated pixel corrector 30a on the encoding side, respectively.

(3) Operation of Intra Prediction

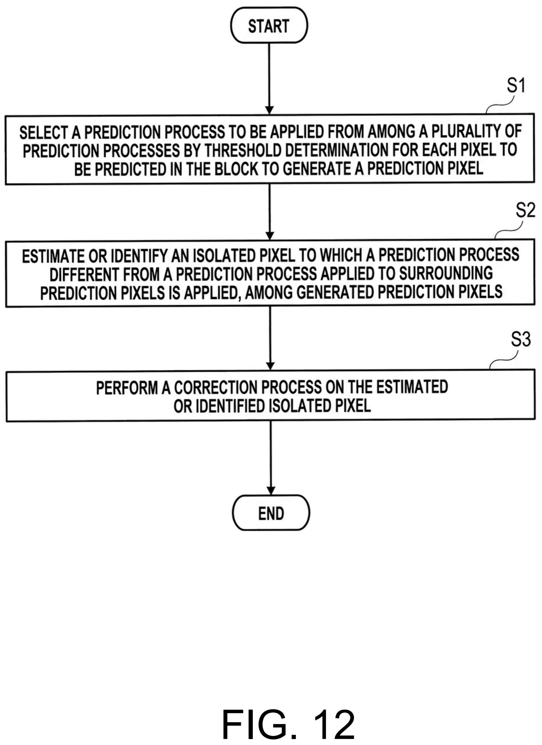

Next, an operation example of intra prediction according to the present embodiment will be described. FIG. 12 is a diagram showing an operation example of the intra predictor 242 on the decoding side according to the present embodiment. Herein, the operation of the intra predictor 242 on the decoding side will be described as an example, but the intra predictor 172 on the encoding side also performs the same operation as the intra predictor 242 on the decoding side. The intra predictor 242 performs the following operation when a flag indicating application of MMLM for a chroma block to be decoded is signaled from the encoding side.

In step S1, the MMLM predictor 10b selects a prediction process to be applied from among a plurality of prediction processes by threshold determination for each pixel to be predicted in the target chroma block to generate a prediction pixel.

In step S2, the isolated pixel determiner 20b estimates, by the above-mentioned first isolated pixel determination operation, or identifies, by the above-mentioned second isolated pixel determination operation, an isolated pixel to which a prediction process different from a prediction process applied to surrounding prediction pixels is applied, among prediction pixels generated in the target chroma block by the MMLM predictor 10b.

In step S3, the isolated pixel corrector 30b performs a filtering process using surrounding prediction pixels in the target chroma block on the isolated pixel estimated or identified by the isolated pixel determiner 20b.

(4) Summary of Embodiments

Each of the intra predictors 172 and 242 according to the present embodiment constitutes a prediction device that performs prediction in units of blocks obtained by dividing an image. Each of the intra predictors 172 and 242 includes: an MMLM predictor 10 configured to select a prediction process to be applied from among a plurality of prediction processes by threshold determination for each pixel to be predicted in a target chroma block to generate a prediction pixel; an isolated pixel determiner 20 configured to estimate or identify an isolated pixel to which a prediction process different from a prediction process applied to surrounding prediction pixels is applied, among prediction pixels generated in the target chroma block by the MMLM predictor 10; and an isolated pixel corrector 30 configured to perform a correction process (filtering process) using surrounding prediction pixels in the target chroma block on the isolated pixel estimated or identified by the isolated pixel determiner 20.

By controlling the filtering process in units of pixels in this way, the filtering process can be performed only in an area where prediction accuracy decreases due to discontinuity caused by isolated pixels, and the discontinuity can be suppressed. Further, since the filtering process is not performed in other areas where prediction accuracy is high, occurrence of image blurring due to the filtering process can be suppressed. Therefore, according to the intra prediction device according to the present embodiment, even when prediction processes can be switched in units of pixels, deterioration in coding performance due to discontinuity of prediction pixels can be suppressed.

(5) Control of Presence/Absence of Application of Filtering Process

In the above-described embodiment, an example has been described in which a flag indicating application of MMLM is signaled from the entropy encoder 130 of the encoding device 1 to the entropy decoder 200 of the decoding device 2, that is, included in a bitstream and transmitted.

In addition to or instead of such a flag, a flag indicating whether or not the filtering process according to the above-described embodiment is applicable (also referred to as a "new flag") may be signaled from the entropy encoder 130 of the encoding device 1 to the entropy decoder 200 of the decoding device 2.

For example, the new flag may be an enable flag indicating that the filtering process is applicable when it is true ("1") and indicating that the filtering process is not applicable when it is false ("0"). Alternatively, the new flag may be a disable flag indicating that the filtering process is not applicable when it is true ("1") and indicating that the filtering process is applicable when it is false ("0").

Such a new flag may be a flag in units of sequences, units of pictures, or units of slices. In the case of units of sequences, the new flag may be included in SPS (Sequence Parameter Set) and signaled. In the case of units of pictures, the new flag may be included in PPS (Picture Parameter Set) or Picture Header and signaled. In the case of units of slices, the new flag may be included in Slice Header and signaled.

Alternatively, without signaling the new flag, whether to apply the filtering process according to the above-described embodiment may be autonomously determined by the encoding side and the decoding side using a common algorithm. For example, each of the encoding side and the decoding side may determine whether to apply the filtering process according to the above-described embodiment without a flag based on features of a picture or a sequence (for example, feature, variance, average, etc. calculated from distribution of pixel values).

(6) Modification Example of Chroma Intra Prediction Process

In the above-described embodiment, MMLM which generates prediction pixels of chroma by switching two linear models for each target pixel has been described, but the number of linear models is not limited to two, and three or more linear models may be switchable for each target pixel.

In this modification example, the isolated pixel corrector 30 can switch three or more linear models for each pixel. When switching three or more linear models, the MMLM predictor 10 performs switching of linear models based on two thresholds (threshold 1 and threshold 2). Even with such a configuration, switching of linear models is performed by threshold determination for each pixel. The isolated pixel determiner 20 and the isolated pixel corrector 30 can improve prediction accuracy by determining whether to perform the filtering process for each pixel based on threshold 1 and/or threshold 2 and the feature amount (luma pixel value) used for threshold determination.

(7) Modification Example of Filtering Process

In the above-described embodiment, an example of controlling presence/absence of the filtering process for each target pixel by the first isolated pixel determination operation or the second isolated pixel determination operation has been described, but instead of controlling presence/absence of the filtering process, the type of the filtering process (filter strength, etc.) may be controlled. In such a modification example, the isolated pixel corrector 30 applies filtering processes having different filter lengths or filtering processes having different filter strengths based on the determination result of whether or not the target pixel is an isolated pixel. For example, when the target pixel is an isolated pixel, the isolated pixel corrector 30 may apply a filtering process with a longer filter or apply a filtering process with a stronger filter strength, compared to a case where the target pixel is not an isolated pixel.

In the above-described embodiment, an example has been described in which the isolated pixel corrector 30 performs the filtering process using only prediction pixels in the target chroma block in the filtering process. However, in the filtering process, the isolated pixel corrector 30 may perform the filtering process using chroma reference pixels existing outside the target chroma block and near the block instead of prediction pixels in the target chroma block or in addition to prediction pixels in the target chroma block. By performing the filtering process using such chroma reference pixels outside the block, improvement in prediction accuracy at a boundary of a prediction image can be expected.

(8) Modification Example Using Non-Adjacent Reference Pixels

In the above-described embodiment, an example has been described in which the MMLM predictor 10 uses adjacent reference pixels in calculating the linear model. However, the MMLM predictor 10 may calculate the linear model using neighboring decoded pixels not adjacent to the target chroma block as reference pixels, like intra prediction using non-adjacent reference pixels (MRL: Multi Reference Line intra prediction) adopted in VVC.

When the isolated pixel corrector 30 performs the filtering process using reference pixels of chroma outside the target chroma block, and the MMLM predictor 10 can execute linear model calculation using the above-mentioned non-adjacent reference pixels for the target chroma block, the isolated pixel corrector 30 may control the filtering process based on whether linear model calculation was performed using non-adjacent reference pixels. For example, when the MMLM predictor 10 performs MMLM using non-adjacent reference pixels, since chroma reference pixels used for generation of the linear model are not adjacent to the block, there is a possibility that prediction accuracy near the boundary of the prediction image conversely decreases due to the filtering process using the chroma reference pixels. Therefore, when the chroma reference pixels are not adjacent to the target chroma block, control may be performed such that the filtering process is performed using only prediction pixels in the target chroma block and the chroma reference pixels are not used for the filtering process. Further, when performing the linear model of MMLM using non-adjacent chroma reference pixels, control may be performed such that the filtering process is not performed.

Furthermore, when generating the linear model of MMLM for the target chroma block using non-adjacent chroma reference pixels, it may be configured to perform the filtering process using decoded pixels adj acent to the target chroma block instead of the non-adjacent chroma reference pixels. While it is necessary to store both non-adjacent chroma reference pixels for linear model generation and adjacent chroma decoded pixels for filtering process on the memory, prediction accuracy of a boundary portion of the prediction image of the target chroma block can be improved by using adjacent chroma decoded pixels.

On the other hand, when reference pixels used for linear model generation of MMLM are non-adjacent reference pixels, the filtering process may be performed using the reference pixels used for linear model generation. By doing so, while prediction accuracy may not be improved in some cases, the filtering process becomes possible without the need to store chroma adjacent reference pixels used for the filtering process on the memory.

Furthermore, when reference pixels used for linear model generation of MMLM are non-adjacent reference pixels, the filtering process may be switched according to a distance (how many lines away) between the target chroma block and the non-adjacent reference pixels. The above-mentioned control of presence/absence of the filtering process, the position of reference pixels (adjacent or non-adjacent) used for the filtering process, and the like may be controlled according to the distance.

(9) Other Embodiments

The above-described embodiment prevents a decrease in prediction accuracy due to isolated pixels generated by threshold determination used for selection of a linear model when applying cross-component prediction in which a linear model is selected for each pixel to a chroma block. Therefore, the same control can be applied to a prediction process in which threshold determination that causes other isolated pixels is performed.

For example, in the above-described embodiment, the prediction process for the chroma block has been described, but it is also applicable to a prediction process for a luma block. Specifically, regarding the luma block, when isolated pixels are generated by switching a plurality of different prediction processes for each pixel by threshold determination, prediction accuracy can be improved also in the prediction process for the luma block by determining whether to perform the filtering process based on a threshold and a feature amount for each pixel compared with the threshold.

Each of the intra predictors 172 and 242 according to such an example constitutes a prediction device that performs prediction in units of blocks obtained by dividing an image. Each of the intra predictors 172 and 242 includes: an MMLM predictor 10 configured to select a prediction process to be applied from among a plurality of prediction processes by threshold determination for each pixel to be predicted in a target luma block to generate a prediction pixel; an isolated pixel determiner 20 configured to estimate or identify an isolated pixel to which a prediction process different from a prediction process applied to surrounding prediction pixels is applied, among prediction pixels generated in the target luma block by the MMLM predictor 10; and an isolated pixel corrector 30 configured to perform a correction process (filtering process) using surrounding prediction pixels in the target luma block on the isolated pixel estimated or identified by the isolated pixel determiner 20.

Further, in the above-described embodiment, intra prediction (cross-component prediction) has been described, but the same operation is applicable to inter prediction. For example, in a case where inter prediction processes in a block are selectively switched for each pixel based on a threshold determined in units of blocks or units of sequences, and isolated pixels are generated by switching a plurality of different prediction processes for each pixel by threshold determination, whether to perform the filtering process is determined based on the threshold and the feature amount for each pixel used for threshold determination, similarly to the above-described embodiment. Thereby, inter prediction accuracy can be improved. For example, the inter predictors 171 and 241 selectively apply a first inter prediction process using a first motion vector and a second inter prediction process using a second motion vector for each target pixel in the block by threshold determination.

Each of the inter predictors 171 and 241 according to such an example constitutes a prediction device that performs prediction in units of blocks obtained by dividing an image. Each of the inter predictors 171 and 241 includes: a prediction pixel generator configured to select an inter prediction process to be applied from among a plurality of inter prediction processes by threshold determination for each pixel to be predicted in a target block to generate a prediction pixel; an isolated pixel determiner 20 configured to estimate or identify an isolated pixel to which an inter prediction process different from an inter prediction process applied to surrounding prediction pixels is applied, among prediction pixels generated in the target block by the prediction pixel generator; and an isolated pixel corrector 30 configured to perform a correction process (filtering process) using surrounding prediction pixels in the target block on the isolated pixel estimated or identified by the isolated pixel determiner 20.

In the above-described embodiment, an example has been mainly described in which the isolated pixel corrector 30 is provided in the intra predictors 172 and 242, and the correction process (filtering process) using prediction pixels around an isolated pixel in a prediction block is performed on the isolated pixel in the prediction block. However, in order to solve the problem of eliminating discontinuity caused by isolated pixels, the filtering process is not limited to the filtering process on the prediction block as described above, and the isolated pixel corrector 30 may be provided in the combiner 150 to perform the filtering process on a block before or after combining. For example, the filtering process may be performed on a reconstructed block (decoded image block) obtained by combining a prediction block and a block of reconstructed prediction residual (prediction residual block), or the filtering process may be performed on a block of reconstructed prediction residual. When performing the filtering process on the reconstructed block, the isolated pixel corrector 30 may perform, for example, a filtering process using reconstructed pixels around an isolated pixel in the reconstructed block (and/or reconstructed pixels outside the reconstructed block) on a reconstructed pixel corresponding to the isolated pixel in the reconstructed block. When performing the filtering process on the prediction residual block, the isolated pixel corrector 30 may perform a filtering process using pixel values around an isolated pixel in the prediction residual block (and/or pixel values outside the prediction residual block) on a pixel value corresponding to the isolated pixel in the prediction residual block.

A program causing a computer to execute each process performed by the image processing device (the encoding device 1, the decoding device 2) may be provided. The program may be recorded on a computer-readable medium. If the computer-readable medium is used, the program can be installed in the computer. Herein, the computer-readable medium on which the program is recorded may be a non-transitory recording medium. The non-transitory recording medium is not particularly limited, but may be, for example, a recording medium such as a CD-ROM or a DVD-ROM. Circuits executing each process performed by the image processing device (the encoding device 1, the decoding device 2) may be integrated, and the image processing device may be configured as a semiconductor integrated circuit (chipset, SoC).

The functions realized by the image processing device (the encoding device 1, the decoding device 2) may be implemented in circuitry or processing circuitry including a general-purpose processor, a specific application processor, an integrated circuit, ASICs (Application Specific Integrated Circuits), a CPU (a Central Processing Unit), a conventional circuit, and/or a combination thereof, programmed to realize the described functions. The processor includes a transistor and other circuits, and is regarded as circuitry or processing circuitry. The processor may be a programmed processor that executes a program stored in a memory. In the present specification, the circuitry, unit, and means are hardware programmed to realize the described functions, or hardware that executes the functions. The hardware may be any hardware disclosed in the present specification, or any hardware known to be programmed to realize the described functions or to execute the functions. When the hardware is a processor regarded as a type of circuitry, the circuitry, means, or unit is a combination of hardware and software used to configure the hardware and/or the processor.

The descriptions "based on" and "depending on/in response to" used in the present disclosure do not mean "based only on" and "depending only on", unless otherwise specified. The description "based on" means both "based only on" and "based at least partially on". Similarly, the description "depending on" means both "depending only on" and "depending at least partially on". The terms "include", "comprise", and variations thereof do not mean including only listed items, and mean that only listed items may be included, or further items may be included in addition to listed items. Further, the term "or" used in the present disclosure is intended not to be exclusive disjunction. Furthermore, any reference to elements using designations such as "first" and "second" used in the present disclosure does not generally limit the amount or order of those elements. These designations can be used in the present specification as a convenient method for distinguishing between two or more elements. Therefore, references to first and second elements do not mean that only two elements can be employed there, or that the first element must precede the second element in some way. In the present disclosure, when articles are added by translation, such as a, an, and the in English, these articles are intended to include a plurality of things unless clearly indicated otherwise from the context.

Although the embodiments have been described in detail with reference to the drawings, specific configurations are not limited to those described above, and various design changes and the like can be made without departing from the gist.

This application claims priority to Japanese Patent Application No. 2023-109566 (filed on July 3, 2023), the entire contents of which are incorporated herein by reference.

(10) Supplementary Note

Features regarding the above-described embodiments will be supplemented.

(Supplementary Note 1)

A prediction device (172, 242) that performs prediction in units of blocks obtained by dividing an image, comprising:

a generator (10) configured to select a prediction process to be applied from among a plurality of prediction processes by threshold determination for each pixel to be predicted in the block to generate a prediction pixel;

a determiner (20) configured to estimate or identify an isolated pixel to which a prediction process different from a prediction process applied to surrounding prediction pixels is applied, among prediction pixels generated in the block by the generator; and

a corrector (30) configured to perform a correction process using another pixel on the isolated pixel estimated or identified by the determiner.

(Supplementary Note 2)

The prediction device according to Supplementary Note 1, wherein
the block is a chroma block, each of the plurality of prediction processes is a process of predicting pixels in the chroma block by a linear model generated using chroma reference pixels around the chroma block and luma reference pixels around a predetermined luma block at a position corresponding to the chroma block, and the plurality of prediction processes differ in the linear model.

(Supplementary Note 3)

The prediction device according to Supplementary Note 2, wherein

the generator includes: a threshold decider (11) configured to decide one or a plurality of thresholds used for selection of the linear model from the luma reference pixels; a linear model generator (12) configured to generate the linear model for each cluster determined by the one or plurality of thresholds;

a linear model selector (13) configured to select the linear model used for prediction of a chroma pixel by comparing a pixel value of a corresponding luma pixel in the predetermined luma block with the one or plurality of thresholds for each chroma pixel in the chroma block; and

a cross-component predictor (14) configured to generate a prediction pixel of the chroma pixel by cross-component prediction using the selected linear model.

(Supplementary Note 4)

The prediction device according to any one of Supplementary Notes 1 to 3, wherein the generator selects a prediction process to be applied to a pixel by comparing a corresponding pixel value with a threshold for each pixel to be predicted, and the determiner estimates a pixel whose corresponding pixel value is near the threshold among the pixels to be predicted as the isolated pixel.

(Supplementary Note 5)

The prediction device according to any one of Supplementary Notes 1 to 3, wherein the determiner:

stores the applied prediction process according to a result of the threshold determination for each pixel to be predicted; and

identifies, as the isolated pixel, a pixel to which a first prediction process is applied among the pixels to be predicted, and for which a second prediction process different from the first prediction process is applied to at least a predetermined number of surrounding pixels.

(Supplementary Note 6)

The prediction device according to any one of Supplementary Notes 1 to 5, wherein the corrector performs a filtering process using prediction pixels around the isolated pixel on the isolated pixel as the correction process.

(Supplementary Note 7)

An encoding device (1) comprising the prediction device according to any one of Supplementary Notes 1 to 6.

(Supplementary Note 8)

A decoding device (2) comprising the prediction device according to any one of Supplementary Notes 1 to 6.

(Supplementary Note 9)

A program for causing a computer to function as the prediction device according to any one of Supplementary Notes 1 to 6.

DESCRIPTION OF REFERENCE NUMERALS

1: Encoding device

2: Decoding device

10: MMLM predictor

11: Threshold decider

12: Linear model generator

13: Linear model selector

14: Cross-component predictor

20: Isolated pixel determiner

30: Isolated pixel corrector

100: Block divider

110: Subtractor

120: Transformer/quantizer

121: Transformer

122: Quantizer

130: Entropy encoder

140: Inverse quantizer/inverse transformer

141: Inverse quantizer

142: Inverse transformer

150: Combiner

160: Memory

170: Predictor

171: Inter predictor

172: Intra predictor

173: Switcher

200: Entropy decoder

210: Inverse quantizer/inverse transformer

211: Inverse quantizer

212: Inverse transformer

220: Combiner

230: Memory

240: Predictor

241: Inter predictor

242: Intra predictor

243: Switcher

**Claims**

1. A prediction device that performs prediction in units of blocks obtained by dividing an image, comprising:

a generator configured to select a prediction process to be applied from among a plurality of prediction processes by threshold determination for each area to be predicted in the block to generate a prediction area;

a determiner configured to estimate or identify a specific area to which a prediction process different from a prediction process applied to surrounding prediction areas is applied, among the prediction areas generated in the block by the generator; and

a corrector configured to perform a correction process using another area on the specific area estimated or identified by the determiner.

2. The prediction device according to claim 1, wherein
the block is a chroma block, each of the plurality of prediction processes is a process of predicting pixels in the chroma block by a prediction model generated using chroma reference areas around the chroma block and luma reference areas around a predetermined luma block at a position corresponding to the chroma block, and the plurality of prediction processes differ in the prediction model.

3. The prediction device according to claim 2, wherein
the generator includes:

a threshold decider configured to decide one or a plurality of thresholds used for selection of the prediction model from the luma reference areas;

a prediction model generator configured to generate the prediction model for each cluster determined by the one or plurality of thresholds;

a prediction model selector configured to select the prediction model used for prediction of a chroma area by comparing a pixel value of a corresponding luma area in the predetermined luma block with the one or plurality of thresholds for each chroma area in the chroma block; and

a cross-component predictor configured to generate a prediction pixel of the chroma area by cross-component prediction using the selected prediction model.

4. The prediction device according to any one of claims 1 to 3, wherein
the generator selects a prediction process to be applied to an area by comparing a corresponding pixel value with a threshold for each area to be predicted, and the determiner estimates an area whose corresponding pixel value is near the threshold among the areas to be predicted as the specific area.

5. The prediction device according to any one of claims 1 to 3, wherein
the determiner: stores the applied prediction process according to a result of the threshold determination for each area to be predicted; and identifies, as the specific area, an area to which a first prediction process is applied among the areas to be predicted, and for which a second prediction process different from the first prediction process is applied to at least a predetermined number of surrounding areas.

6. The prediction device according to any one of claims 1 to 3, wherein
the corrector performs a filtering process using prediction areas around the specific area on the specific area as the correction process.

7. An encoding device comprising the prediction device according to claim 1.

8. A decoding device comprising the prediction device according to claim 1.

9. A program for causing a computer to function as the prediction device according to claim 1.

FIG. 1

FIG. 2

CHROMA REFERENCE PIXELS

PREDICTION TARGET CHROMA BLOCK
(TARGET CHROMA BLOCK)

(a)

CHROMA

N

N

LUMA REFERENCE PIXELS

DECODED BLOCK OF LUMA AT A
POSITION CORRESPONDING TO
THE TARGET CHROMA BLOCK
(PREDETERMINED LUMA BLOCK)

(b)

LUMA

2N

2N

C(CHROMA)

LINEAR MODEL

(c)

Y(LUMA)

# FIG. 3

FIG. 4

SELECT MMLM LINEAR MODEL

FIG. 5

pred_cb

FIG. 6

FIG. 7

```
for (int i=0; i< CUheight; i++){  ～S101
  for (int j=0; j<CUwidth; j++){  ～S102
    if (recLuma[i,j] <= th){  ～S103
      pred[i,j] = a0 * recLuma[i,j] + b0  ～S104
    }
    else{  ～S105
      pred[i,j] = a1 * recLuma[i,j] + b1  ～S106
    }
  }
}
for (int i=0; i< CUheight; i++){  ～S107
  for (int j=0; j<CUwidth; j++){  ～S108
    if (recLuma[i,j] > th − K && recLuma[i,j] < th + K){  ～S109
      pred[i,j] = (pred[i,j] * c0 + pred[i−1,j] * c1 + pred[i+1,j] * c2
               + pred[i,j−1] * c3 + pred[i,j+1] * c4) / (c0 + c1 + c2 + c3 + c4)  ～S110
    }
  }
}
```

# FIG. 8

```
for (int i=0; i< CUheight; i++){ ～S201
   for (int j=0; j<CUwidth; j++){ ～S202
      if (recLuma[i,j] <= th){ ～S203
         pred[i,j] = a0 * recLuma[i,j] + b0 ～S204
         flag[i,j] = 0 ～S205
      }
      else{ ～S206
         pred[i,j] = a1 * recLuma[i,j] + b1 ～S207
         flag[i,j] = 1 ～S208
      }
   }
}
for (int i=0; i< CUheight; i++){ ～S209
   for (int j=0; j<CUwidth; j++){ ～S210
      sum = flag[i-1,j-1] + flag[i-1,j] + flag[i-1,j+1] + flag[i,j-1]
               + flag[i,j+1] + flag[i+1,j-1] + flag[i+1,j] + flag[i+1,j+1] ～S211
      if ((flag == 0 && sum > N) || (flag == 1 && sum < M){ ～S212
         pred[i,j] = (pred[i,j] * c0 + pred[i-1,j] * c1 + pred[i+1,j] * c2
                        + pred[i,j-1] * c3 + pred[i,j+1] * c4) / (c0 + c1 + c2 + c3 + c4)～S213
      }
   }
}
```

# FIG. 9

FIG. 10

FIG. 11

START

S1

SELECT A PREDICTION PROCESS TO BE APPLIED FROM AMONG A PLURALITY OF PREDICTION PROCESSES BY THRESHOLD DETERMINATION FOR EACH PIXEL TO BE PREDICTED IN THE BLOCK TO GENERATE A PREDICTION PIXEL

S2

ESTIMATE OR IDENTIFY AN ISOLATED PIXEL TO WHICH A PREDICTION PROCESS DIFFERENT FROM A PREDICTION PROCESS APPLIED TO SURROUNDING PREDICTION PIXELS IS APPLIED, AMONG GENERATED PREDICTION PIXELS

S3

PERFORM A CORRECTION PROCESS ON THE ESTIMATED OR IDENTIFIED ISOLATED PIXEL

END

# FIG. 12

## INTERNATIONAL SEARCH REPORT

International application No.

**PCT/JP2024/023865**

### A. CLASSIFICATION OF SUBJECT MATTER

*H04N 19/11*(2014.01)i; *H04N 19/182*(2014.01)i; *H04N 19/186*(2014.01)i; *H04N 19/593*(2014.01)i
FI:    H04N19/11; H04N19/182; H04N19/186; H04N19/593

According to International Patent Classification (IPC) or to both national classification and IPC

### B. FIELDS SEARCHED

Minimum documentation searched (classification system followed by classification symbols)

H04N19/00-19/98; H04N7/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-145487 A (SHARP KABUSHIKI KAISHA) 10 September 2020 (2020-09-10) paragraphs [0014]-[0562], fig. 1-48 | 1-9 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **02 September 2024** | **10 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/023865**

| Patent document cited in search report | | | Publication date (day/month/year) | Patent family member(s) | | | Publication date (day/month/year) |
|---|---|---|---|---|---|---|---|
| JP | 2020-145487 | A | 10 September 2020 | US | 2020/0177911 | A1 | |
| | | | | paragraphs [0064]-[0706], fig. 1-50 | | | |
| | | | | US | 2022/0060741 | A1 | |
| | | | | WO | 2019/004283 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023109566 A